# EUROPEAN PATENT APPLICATION

(11) **EP 3 163 981 A1**
(43) Date of publication of application: **03.05.2017**
(21) Application number: 16180132.9
(22) Date of filing: 19.07.2016
(51) Int. Cl.: H05B 37/02

(54) **SIGNAL CONVERSION DEVICE AND LIGHTING DEVICE INCLUDING THE SAME**

(30) Priority: 30.10.2015 TW 104135784
(71) Applicant: Hep Tech Co. Ltd., 408 Taichung City (TW)
(72) Inventor: CHEN, Po-Yen, 11670 Taipei City (TW); HUNG, Ta-Sheng, 408 Taichung City (TW); LIU, Chen-Yu, 406 Taichung City (TW)
(74) Representative: Lermer, Christoph

(57) **Abstract**

A signal conversion device is provided, which may include a connection interface, a processing module, and a signal conversion module. The connection interface may be detachably coupled to the power conversion module of a lighting device, and may receive a wired control signal via the power conversion module. The processing module may be coupled to the connection interface. The signal conversion module may be coupled to the processing module and the connection interface, and may include an industrial communication protocol standard interface; the signal conversion module may convert the wired control signal into an industrial communication protocol standard signal so as to control at least one controlled device.

## Description

### CROSS REFERENCE TO RELATED APPLICATION

This application also claims priority to Taiwan Patent Application No. 104135784 filed in the Taiwan Patent Office on October 30, 2015, the entire content of which is incorporated herein by reference.

### TECHNICAL FIELD

The present disclosure relates to a signal conversion device, in particular to a signal conversion applicable to a lighting device. The present disclosure further relates to a lighting device having the signal conversion device.

### BACKGROUND

Conventional lighting control system can be classified into wireless lighting control system and wired lighting control system. In general, the lighting devices of most of office buildings, factories and dwelling houses are controlled by wired lighting control system; in other words, the lighting devices are usually controlled by the lighting switches installed on the wall. Thus, if the user wants to turn on or turn off the lighting device at a specific position, or adjusts its brightness, the user only needs to walk to the switch corresponding to the lighting device and then the user can operate the lighting device. Therefore, wired lighting control system can help the user conveniently operate the lighting device; however, if there are many lighting devices distributed at different positions over a large area, the user cannot operate all of these lighting devices in a short time; in this case, wired lighting control system is not very convenient for the user.

Accordingly, wireless lighting control system was developed so as to solve the above problem. However, as wireless lighting control system needs to transmit control signals via the wireless network, but the wireless network is not always stable; therefore, once the wireless network is disconnected, the user absolutely cannot control these lighting devices. Thus, the reliability of wireless lighting control system still needs to be improved.

In addition, the practicality of wireless lighting control system is still in dispute. For example, in general, if a user only wants to operate a few lighting devices rather than a large number of lighting devices, the user will usually use the switches installed on the wall to perform the above operation; under above circumstance, it will be very inconvenient for the user to use a mobile phone, a computer or other wireless control devices to control the lighting devices in the house. For the reason, wireless lighting control system cannot conform to the habits of most users without further improvements. As described above, wired lighting control system and wireless lighting control system have their advantages, but they still have shortcomings which need to be overcome.

Moreover, conventional lighting control system, no matter wired lighting control system or wireless lighting control system, is usually used for controlling the lighting devices in buildings; however, most of the lighting devices do not need to be frequently turned on and turned off times; thus, lighting control system remains idle for most of the time, so cannot achieve high utilization rate.

Furthermore, conventional wireless lighting control system only can be used to control the lighting devices in buildings rather than other devices; therefore, if a user wants to control other devices via the wireless network or perform other applications, the user needs to install another independent network; therefore, the application of conventional wireless lighting control system is limited.

Accordingly, it has become an important issue to improve the above shortcomings of conventional lighting control system.

### SUMMARY

The present disclosure is related to a signal conversion device. In one embodiment of the disclosure, the signal conversion device may include a connection interface, a processing module, and a signal conversion module. The connection interface may be detachably coupled to the power conversion module of a lighting device, and may receive a wired control signal via the power conversion module. The processing module may be coupled to the connection interface. The signal conversion module may be coupled to the processing module and the connection interface, and may include an industrial communication protocol standard interface; the signal conversion module may convert the wired control signal into an industrial communication protocol standard signal so as to control at least one controlled device.

The present disclosure is further related to a lighting device. In one embodiment of the disclosure, the lighting device may include a power conversion module, a lighting module, and a signal conversion device; the signal conversion device may include a connection interface, a processing module, and a signal conversion module. The connection interface may be detachably coupled to the power conversion module of the lighting device, and may receive a wired control signal via the power conversion module. The processing module may be coupled to the connection interface. The signal conversion module may be coupled to the processing module and the connection interface, and may include an industrial communication protocol standard interface; the signal conversion module may convert the wired control signal into an industrial communication protocol standard signal via the industrial communication protocol standard interface so as to control at least one controlled device.

In a preferred embodiment, the signal conversion device may further include a wireless communication module, wherein the wireless communication module may be coupled to the processing module, and receive a wireless control signal.

In a preferred embodiment, the signal conversion module may convert the wireless control signal into the industrial communication protocol standard signal via the industrial communication protocol standard interface.

In a preferred embodiment, the signal conversion module may transmit the industrial communication protocol standard signal to at least one controlled device via the wired network or the wireless network.

In a preferred embodiment, the processing module may receive the wireless control signal via the wireless communication module, and may transmit the wireless control signal to the power conversion module.

In a preferred embodiment, the industrial communication protocol standard interface may be Modbus, RS485, or RS433.

In a preferred embodiment, the connection interface may be a plug-and-play interface.

In a preferred embodiment, the power conversion module may be an electrical ballast.

In a preferred embodiment, the lighting module may be a gas-discharge lamp.

In a preferred embodiment, the gas-discharge lamp may be a mercury lamp, a metal halide lamp, a sodium lamp, a fluorescent lamp, or a xenon lamp

In a preferred embodiment, the power conversion module may be a LED driver.

In a preferred embodiment, the lighting module may be a LED lamp.

In a preferred embodiment, the processing module may be a microcontroller.

Further scope of applicability of the present application will become more apparent from the detailed description given hereinafter. However, it should be understood that the detailed description and specific examples, while indicating exemplary embodiments of the disclosure, are given by way of illustration only, since various changes and modifications within the spirit and scope of the disclosure will become apparent to those skilled in the art from this detailed description.

### BRIEF DESCRIPTION OF THE DRAWINGS

The present disclosure will become more fully understood from the detailed description given herein below and the accompanying drawings which are given by way of illustration only, and thus are not limitative of the present disclosure and wherein:
FIG. 1 is the block diagram of the first embodiment of the lighting device having the signal conversion device in accordance with the present disclosure.
FIG. 2 is the schematic view of the second embodiment of the lighting device having the signal conversion device in accordance with the present disclosure.
FIG. 3 is the schematic view of the third embodiment of the lighting device having the signal conversion device in accordance with the present disclosure.
FIG. 4 is the first schematic view of the fourth embodiment of the lighting device having the signal conversion device in accordance with the present disclosure.
FIG. 5 is the second schematic view of the fourth embodiment of the lighting device having the signal conversion device in accordance with the present disclosure.
FIG. 6 is the third schematic view of the fourth embodiment of the lighting device having the signal conversion device in accordance with the present disclosure.
FIG. 7 is the fourth schematic view of the fourth embodiment of the lighting device having the signal conversion device in accordance with the present disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

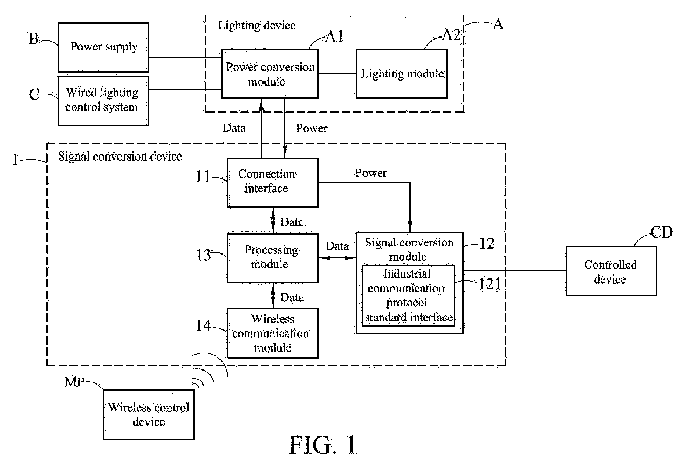

Please refer to FIG. 1, which is the block diagram of the first embodiment of the lighting device having the signal conversion device in accordance with the present disclosure. As shown in FIG. 1, the signal conversion device 1 may be coupled to a lighting device A, and the lighting device A may include a power conversion module A1 and a lighting module A2; the power conversion module A1 may be coupled to a power supply B and a light wired lighting control system C, and may receive the wired control signals from the wired lighting control system C so as to control the lighting module A2. The signal conversion device 1 may include a connection interface 11, a signal conversion module 12, a processing module 13, and a wireless communication module 14.

The connection interface 11 may be detachably coupled to the power conversion module A1 of the lighting device A, and may be coupled to the lighting module A2 of the lighting device A via the power conversion module A1; the connection interface 11 may receive the wired control signals transmitted from the wired lighting control system C via the power conversion module A1; the connection interface 11 may be a plug-and-play interface, such as USB interface and the like.

The signal conversion module 12 may be coupled to the processing module 13 and the connection interface 11, and may include an industrial communication protocol standard interface 121. The signal conversion module 12 may convert the wired control signals into industrial communication protocol standard signals via the industrial communication protocol standard interface 121, and may transmit the industrial communication protocol standard signals to the controlled device CD with the same industrial communication protocol standard interface so as to control the controlled device CD. The industrial communication protocol standard interface 121 may be Modbus, RS485, or RS433, etc.

The processing module 13 may be coupled to the signal conversion module 12 and the connection interface 11; the processing module 13 may be, for example, a microcontroller (MCU), and the like. The wireless communication module 14 may be coupled to the processing module 13, and may receive the wireless control signals transmitted from a wireless control device MP, such as mobile phone and the like. The processing module 13 may receive the wireless control signals via the wireless communication module 14, and may transmit the wireless control signals to the power conversion module A1 so as to control the lighting module A2. Similarly, the signal conversion module 12 may convert the wireless control signals into the industrial communication protocol standard signals via the industrial communication protocol standard interface 121, and transmit the industrial communication protocol standard signals to the controlled device CD with the same industrial communication protocol standard interface via the wired network or the wireless network so as to control the controlled device CD.

As describe above, after the lighting device A is coupled to the signal conversion device 1 via the connection interface 11, the user can not only control the lighting device A via the wired lighting control system C, but also can control the lighting device A via various wireless control devices MP; in this way, the wired lighting control system C can also have the wireless control function. Therefore, the wired lighting control system according to the embodiment can not only have the advantages of both of the wired lighting control system and the wireless lighting control system, but also can simultaneously improve their shortcomings, which is more convenient for the user.

Besides, the user can not only transmit the control signals to the signal conversion module 12 via the wired lighting control system C, but also can transmit the control signals to the signal conversion module 12 via the wireless control device MP; afterward, the signal conversion module 12 can convert the control signals into the industrial communication protocol standard signals via the industrial communication protocol standard interface 121, such as Modbus, RS485, and RS433, etc., and then transmit the industrial communication protocol standard signals to various controlled devices CD via the wired network or the wireless network in order to control these controlled devices CD; thus, the wired lighting control system C can not only be used to control the lighting device A, but also can be used to control various controlled devices CD, which can significantly increase the utilization rate of the wired lighting control system C, so the wired lighting control system C can be more flexible in use.

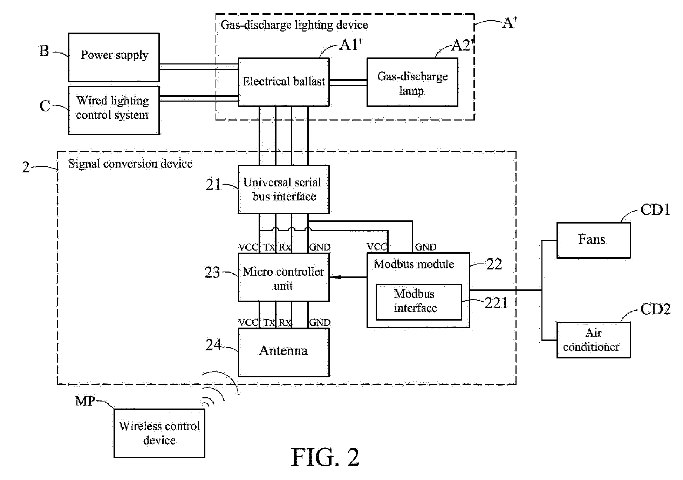

Please refer to FIG. 2, which is the schematic view of the second embodiment of the lighting device having the signal conversion device in accordance with the present disclosure. The embodiment illustrates one of the preferred designs of the lighting device having the signal conversion device in accordance with the present disclosure.

As shown in FIG. 2, the signal conversion device 2 may be coupled to a gas-discharge lighting device A', and the gas-discharge lighting device A' may include an electrical ballast A1' and a gas-discharge lamp A2'; the electrical ballast A1' may be coupled to a power supply B and a light wired lighting control system C, and may receive the wired control signals from the wired lighting control system C so as to control the gas-discharge lamp A2'. The signal conversion device 2 may include a USB interface 21, a Modbus module 22, a microcontroller (MCU) 23, and an antenna 24. Preferably, the gas-discharge lamp A2' may be a mercury lamp, a metal halide lamp, a sodium lamp, a fluorescent lamp, or a xenon lamp, etc.

The USB interface 21 may be detachably coupled to the electrical ballast A1' of the gas-discharge lighting device A', and may be coupled to the gas-discharge lamp A2' of the gas-discharge lighting device A' via the electrical ballast A1'; the USB interface 21 may receive the wired control signals transmitted from the wired lighting control system C via the electrical ballast A1'.

The Modbus module 22 may be coupled to the microcontroller 23 and the USB interface 21, and may include a Modbus interface 221. The Modbus module 22 may convert the wired control signals into the Modbus signals via the Modbus interface 221, and may transmit the Modbus signals to the fans CD1 and the air conditioner CD2 with the Modbus interface so as to control the fans CD1 and the air conditioner CD2.

The microcontroller 23 may be coupled to the Modbus module 22 and the USB interface 21. The antenna 24 may be coupled to the microcontroller 23, and may receive the wireless control signals transmitted from a wireless control device MP, such as mobile phone and the like. The microcontroller 23 may receive the wireless control signals via the antenna 24, and may transmit the wireless control signals to the electrical ballast A1' so as to control the gas-discharge lamp A2'. Similarly, the Modbus module 22 may convert the wireless control signals into the Modbus signals via the Modbus interface 221, and transmit the Modbus signals to the fans CD1 and the air conditioner CD2 via the wired network or the wireless network with the Modbus interface so as to control the fans CD1 and the air conditioner CD2.

As describe above, after the gas-discharge lighting device A' is coupled to the signal conversion device 2 via the USB interface 21, the user can not only control the gas-discharge lighting device A' via the wired lighting control system C, but also can control the gas-discharge lighting device A' via various wireless control devices MP; in this way, the wired lighting control system C can also have the wireless control function. Therefore, the wired lighting control system according to the embodiment can not only have the advantages of both of the wired lighting control system and the wireless lighting control system, but also can simultaneously improve their shortcomings, which is more convenient for the user.

Besides, the user can not only transmit the control signals to the Modbus module 22 via the wired lighting control system C, but also can transmit the control signals to the Modbus module 22 via the wireless control device MP; afterward, the Modbus module 22 can convert the control signals into the Modbus signals via the Modbus interface 221 and then transmit the Modbus signals to the fans CD1 and the air conditioner CD2 via the wired network or the wireless network in order to control the fans CD1 and the air conditioner CD2; thus, the wired lighting control system C can not only be used to control the gas-discharge lighting device A', but also can be used to control the fans CD1 and the air conditioner CD2, which can significantly increase the utilization rate of the wired lighting control system C, so the wired lighting control system C can be more flexible in use.

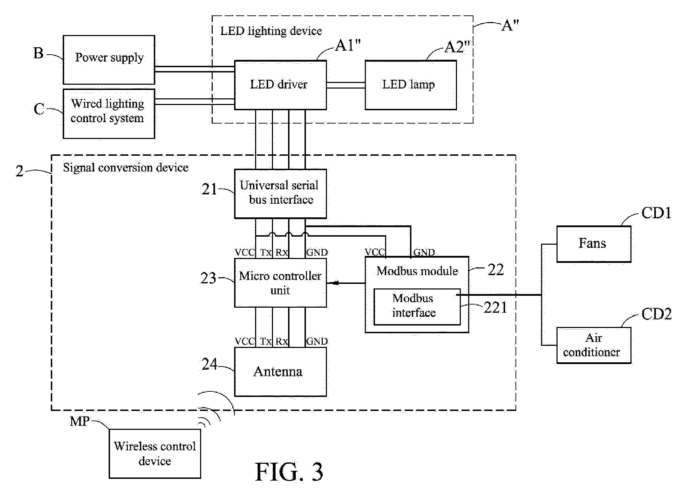

Please refer to FIG. 3, which is the schematic view of the third embodiment of the lighting device having the signal conversion device in accordance with the present disclosure. The embodiment illustrates one of the preferred designs of the lighting device having the signal conversion device in accordance with the present disclosure.

As shown in FIG. 3, the signal conversion device 2 may be coupled to a LED lighting device A", and the LED lighting device A" may include a LED driver A1" and a LED lamp A2"; the LED driver A1" may be coupled to a power supply B and a light wired lighting control system C, and may receive the wired control signals from the wired lighting control system C so as to control the LED lamp A2". The signal conversion device 2 may include a USB interface 21, a Modbus module 22, a microcontroller (MCU) 23, and an antenna 24.

The USB interface 21 may be detachably coupled to the LED driver A1" of the LED lighting device A", and may be coupled to the LED lamp A2" of the LED lighting device A' via the LED driver A1"; the USB interface 21 may receive the wired control signals transmitted from the wired lighting control system C via the LED driver A1".

The Modbus module 22 may be coupled to the microcontroller 23 and the USB interface 21, and may include a Modbus interface 221. The Modbus module 22 may convert the wired control signals into the Modbus signals via the Modbus interface 221, and may transmit the Modbus signals to the fans CD1 and the air conditioner CD2 with the Modbus interface so as to control the fans CD1 and the air conditioner CD2.

The microcontroller 23 may be coupled to the Modbus module 22 and the USB interface 21. The antenna 24 may be coupled to the microcontroller 23, and may receive the wireless control signals transmitted from a wireless control device MP, such as mobile phone and the like. The microcontroller 23 may receive the wireless control signals via the antenna 24, and may transmit the wireless control signals to the LED driver A1" so as to control the LED lamp A2". Similarly, the Modbus module 22 may convert the wireless control signals into the Modbus signals via the Modbus interface 221, and transmit the Modbus signals to the fans CD1 and the air conditioner CD2 via the wired network or the wireless network with the Modbus interface so as to control the fans CD1 and the air conditioner CD2.

It is worthy to point out that conventional wired lighting control system and wireless lighting control system have their advantages, but they still have shortcomings which need to be overcome, so they cannot satisfy actual requirements. On the contrary, according to one embodiment of the present disclosure, the lighting device may have a signal conversion module; thus, the wired lighting control system with the lighting device can not only have the wired control function, but also can have the wireless control function. Therefore, the wired lighting control system according to the embodiment of the present disclosure can not only have the advantages of both of the wired lighting control system and the wireless lighting control system, but also can simultaneously improve their shortcomings, which is more convenient for the user.

Also, conventional wireless lighting control system needs to transmit control signals via the wireless network, but the wireless network is not always stable; therefore, the reliability of wireless lighting control system still needs to be improved. On the contrary, according to one embodiment of the present disclosure, the lighting device can not only be controlled by the wired network, but also can be controlled by the wireless network; therefore, the user can still control the lighting device even if the wireless network is disconnected. Thus, the reliability of the lighting control system with the lighting device according to the embodiment of the present disclosure can be significantly enhanced.

Conventional lighting control system is usually used for controlling the lighting devices in buildings, so conventional lighting control system may remain idle for most of the time, so cannot achieve high utilization rate. On the contrary, according to one embodiment of the present disclosure, the lighting device may have a signal conversion module; therefore, the lighting control system with the lighting device can allows the user to transmit the control signals via the wired network or the wireless network, and then the control signals may be converted into the industrial communication protocol standard signals so as to control various controlled devices. Accordingly, the lighting control system can not only be used to control the lighting device, but also can be used to control various controlled devices, which can significantly increase the utilization rate of the lighting control system, so the lighting control system can be more flexible in use.

Moreover, according to one embodiment of the present disclosure, the signal conversion module of the lighting device may be detachably coupled to the power conversion module of the lighting device via a connector, so the signal conversion module and the lighting device can be different products for sales, and the user also can determine whether to purchase the signal conversion module or not according to the user's requirements. Thus, the lighting device according to the embodiment of the present disclosure can exactly conform to the requirements of the market and achieve high commercial value.

Furthermore, according to one embodiment of the present disclosure, the design of the lighting device can not only be applied to gas-discharge lamp, but also can be applied to LED lamp, or other different lighting devices. The application of the lighting device according to the embodiment of the present disclosure can be more comprehexasive.

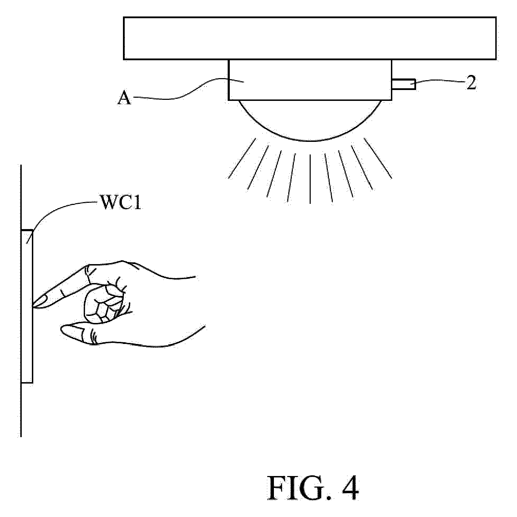

Please refer to FIG. 4, FIG. 5, FIG. 6, and FIG. 7, which is the first schematic view, the second schematic view, the third schematic view, and the fourth schematic view of the fourth embodiment of the lighting device having the signal conversion device in accordance with the present disclosure. The embodiment illustrates one of preferred usage situations of the lighting device having the signal conversion device in accordance with the present disclosure.

As shown in FIG. 4, the user can transmit the wired control signal to the lighting device A via the control interface WCI installed on the wall to turn on the lighting device A.

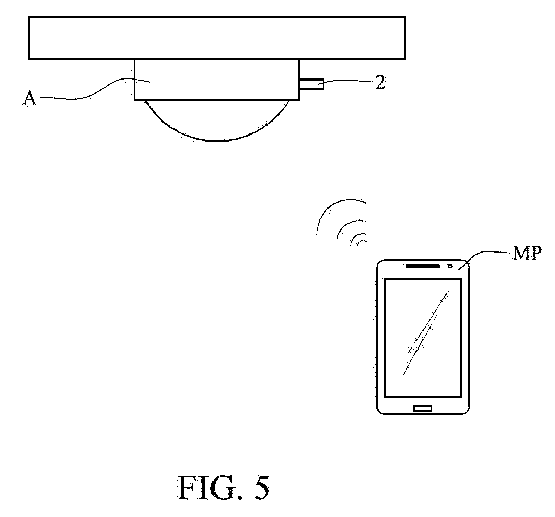

As shown in FIG. 5, the user can transmit the wireless control signal to the lighting device A via the smart phone MP to turn off the lighting device A.

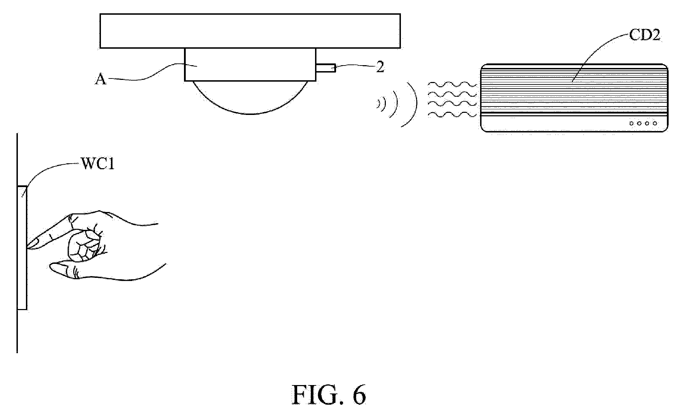

As shown in FIG. 6, the user can transmit the wired control signal to the air conditioner CD2 via the control interface WCI installed on the wall to turn on the air conditioner CD2.

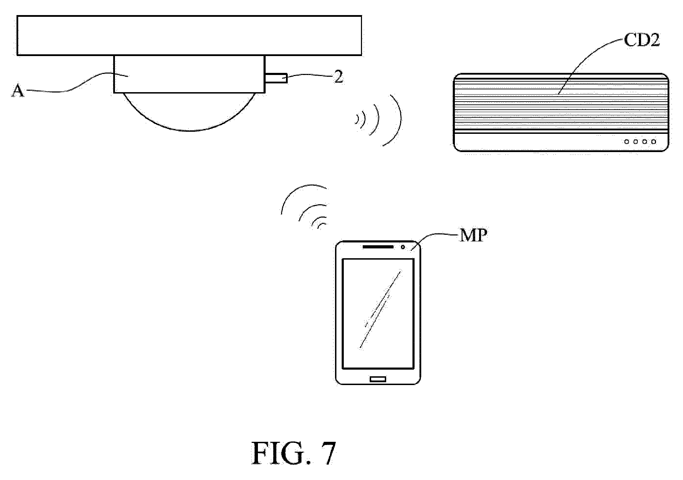

As shown in FIG. 7, the user can transmit the wireless control signal to the air conditioner CD2 via the smart phone MP to turn off the air conditioner CD2.

As described above, the user can not only control the lighting device A via the wired network of the wired lighting control system, but also can control the lighting device A via the wireless network of the smart phone MP.

Besides, the user can not only transmit the wired control signals to the lighting device A via the wired network of the wired lighting control system, but also can transmit the wireless control signals to the lighting device A via the wireless network of the wireless control device MP, such as smart phone, etc. Afterward, the lighting device A can convert the wired control signals or the wireless control signals into the industrial communication protocol standard signals via the industrial communication protocol standard interface, and then transmit the industrial communication protocol standard signals to the air conditioner CD2 which also has the industrial communication protocol standard interface so as to control the air conditioner CD2.

In summation of the description above, the signal conversion device and the lighting device having the same in accordance with the embodiments of the present disclosure may have the following advantages:
(1)according to one embodiment of the present disclosure, the lighting device may have a signal conversion module; thus, the wired lighting control system with the lighting device can not only have the wired control function, but also can have the wireless control function. Therefore, the wired lighting control system according to the embodiment of the present disclosure can not only have the advantages of both of the wired lighting control system and the wireless lighting control system, but also can simultaneously improve their shortcomings, which is more convenient for the user.
(2)According to one embodiment of the present disclosure, the lighting device can not only be controlled by the wired network, but also can be controlled by the wireless network; therefore, the user can still control the lighting device even if the wireless network is disconnected. Thus, the reliability of the lighting control system with the lighting device according to the embodiment of the present disclosure can be significantly enhanced.
(3)According to one embodiment of the present disclosure, the lighting device may have a signal conversion module; therefore, the lighting control system with the lighting device can allows the user to transmit the control signals via the wired network or the wireless network, and then the control signals may be converted into the industrial communication protocol standard signals so as to control various controlled devices. Accordingly, the lighting control system according to the embodiment of the present disclosure can not only be used to control the lighting device, but also can be used to control various controlled devices, which can significantly increase the utilization rate of the lighting control system, so the lighting control system can be more flexible in use.
(4)According to one embodiment of the present disclosure, the signal conversion module of the lighting device may be detachably coupled to the power conversion module of the lighting device via a connector, so the signal conversion module and the lighting device can be different products for sales, and the user also can determine whether to purchase the signal conversion module or not according to the user's requirements. Thus, the lighting device according to the embodiment of the present disclosure can exactly conform to the requirements of the market and achieve high commercial value.
(5)According to one embodiment of the present disclosure, the design of the lighting device can not only be applied to gas-discharge lamp, but also can be applied to LED lamp, or other different lighting devices. The application of the lighting device according to the embodiment of the present disclosure can be more comprehensive.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A signal conversion device applicable to a lighting device, comprising:
a connection interface, detachably coupled to a power conversion module of the lighting device, and receiving a wired control signal via the power conversion module;
a processing module, coupled to the connection interface; and
a signal conversion device, coupled to the processing module and the connection interface, wherein the signal conversion device comprises an industrial communication protocol standard interface; the signal conversion module converts the wired control signal into an industrial communication protocol standard signal via the industrial communication protocol standard interface.

2. The signal conversion device of claim 1, further comprises a wireless communication module, wherein the wireless communication module is coupled to the processing module, and receives a wireless control signal.

3. The signal conversion device of claim 2, wherein the signal conversion module converts the wireless control signal into the industrial communication protocol standard signal via the industrial communication protocol standard interface.

4. The signal conversion device of claim 3, wherein the signal conversion module transmits the industrial communication protocol standard signal to at least one controlled device via a wired network or a wireless network.

5. The signal conversion device of claim 4, wherein the processing module receives the wireless control signal via the wireless communication module, and transmits the wireless control signal to the power conversion module.

6. The signal conversion device of claim 5, wherein the industrial communication protocol standard interface is Modbus, RS485, or RS433.

7. The signal conversion device of claim 1, wherein the connection interface is a plug-and-play interface, the power conversion module is an electrical ballast or a LED driver, and the processing module is a microcontroller.

8. A lighting device, comprising a power conversion module, a lighting module, and a signal conversion device, wherein the signal conversion device comprises:
a connection interface, detachably coupled to the power conversion module of the lighting device, and receiving a wired control signal via the power conversion module;
a processing module, coupled to the connection interface; and
a signal conversion device, coupled to the processing module and the connection interface, wherein the signal conversion device comprises an industrial communication protocol standard interface; the signal conversion module converts the wired control signal into an industrial communication protocol standard signal via the industrial communication protocol standard interface.

9. The lighting device of claim 8, further comprising a wireless communication module, wherein the wireless communication module is coupled to the processing module, and receives a wireless control signal.

10. The lighting device of claim 9, wherein the signal conversion module converts the wireless control signal into the industrial communication protocol standard signal via the industrial communication protocol standard interface.

11. The lighting device of claim 10, wherein the signal conversion module transmits the industrial communication protocol standard signal to at least one controlled device via a wired network or a wireless network.

12. The lighting device of claim 11, wherein the processing module receives the wireless control signal via the wireless communication module, and transmits the wireless control signal to the power conversion module.

13. The lighting device of claim 12, wherein the industrial communication protocol standard interface is Modbus, RS485, or RS433, the connection interface is a plug-and-play interface, and the processing module is a microcontroller.

14. The lighting device of claim 8, wherein the power conversion module is an electrical ballast, the lighting module is a gas-discharge lamp and the gas-discharge lamp is a mercury lamp, a metal halide lamp, a sodium lamp, a fluorescent lamp, or a xenon lamp.

15. The lighting device of claim 8, wherein the power conversion module is a LED driver, and the lighting module is a LED lamp.
